**Europäisches Patentamt**

**European Patent Office**

**Office européen des brevets**

(19)

(11) Veröffentlichungsnummer: **0 299 262 B1**

(12) **EUROPÄISCHE PATENTSCHRIFT**

(45) Veröffentlichungstag der Patentschrift: **19.08.92**

(51) Int. Cl.⁵: **B60J 7/02**

(21) Anmeldenummer: **88110201.6**

(22) Anmeldetag: **27.06.88**

(54) **Schiebedachentwässerung für Kraftfahrzeuge.**

(30) Priorität: **14.07.87 DE 3723175**

(43) Veröffentlichungstag der Anmeldung:
**18.01.89 Patentblatt 89/03**

(45) Bekanntmachung des Hinweises auf die
Patenterteilung:
**19.08.92 Patentblatt 92/34**

(84) Benannte Vertragsstaaten:
**DE ES FR GB IT**

(56) Entgegenhaltungen:
**DE-A- 2 229 628**
**DE-U- 8 800 738**
**GB-A- 2 075 658**
**US-A- 4 250 927**

(73) Patentinhaber: **FORD-WERKE AKTIENGESELL-SCHAFT**
**Werk Köln-Niehl Henry-Ford-Strasse Post-fach 60 40 02**
**W-5000 Köln 60(DE)**

(84) Benannte Vertragsstaaten:
**DE IT**

(73) Patentinhaber: **FORD MOTOR COMPANY LI-MITED**
**Eagle Way**

**Brentwood Essex CM13 3BW(GB)**

(84) Benannte Vertragsstaaten:
**GB**

(73) Patentinhaber: **FORD FRANCE SOCIETE ANO-NYME**
**344 Avenue Napoléon Bonaparte B.P. 307**
**F-92506 Rueil Malmaison Cedex(FR)**

(84) Benannte Vertragsstaaten:
**FR**

(73) Patentinhaber: **Ford Motor Company**
**One Parklane Boulevard Parklane Towers East**
**Dearborn Michigan 48126(US)**

(84) Benannte Vertragsstaaten:
**ES**

(72) Erfinder: **Sielk, Werner**
**Dr. J.Fliegerstrasse 6 a**
**W-5042 Erftstadt(DE)**
Erfinder: **Tobehn, Manfred**
**An der Pohlstatt 8**
**W-5210 Troisdorf 22(DE)**

(74) Vertreter: **Messulam, Alec Moses**
**A. Messulam & Co. 24 Broadway**
**Leigh on Sea Essex SS9 1BN(GB)**

EP 0 299 262 B1

## Beschreibung

Die Erfindung bezieht sich auf eine Schiebedachentwässerung für Kraftfahrzeuge der im Oberbegriff des Patentanspruches 1 erläuterten Art.

Aus der DE-C 30 26 231 ist eine Schiebedachentwässerung für Kraftfahrzeuge mit einer im Schiebedachrahmen angeordneten Wasserauffangrinne bekannt, aus der über an den Ecken des Schiebedachrahmens angeordnete Wasserablaufstutzen und daran angeschlossene Wasserablaufschläuche über den Dichtspalt eingedrungenes Wasser über die Dachsäulen der Karosserie nach außen abgeführt wird.

Bei einer solchen bekannten Schiebedachentwässerung treten verschiedene Nachteile auf. Wird ein verhältnismäßig dünner und steifer Wasserablaufschlauch benutzt, so wird das Einfädeln in den Hohlraum der Dachsäulen erleichtert, durch Vibrationen und Schwingungen des Kraftfahrzeuges kann es jedoch zum Anschlagen des Wasserablaufschlauches an die Wände der Dachsäulen kommen, wodurch störende Poltergeräusche entstehen. Wird ein verhältnismäßig weicher und flexibler Wasserablaufschlauch verwendet, so können derartige Geräusche zwar vermieden werden, das Einfädeln solcher weicher, flexibler Wasserablaufschläuche in die Dachsäulen, insbesondere in die Windschutzscheibensäulen ist aber verhältnismäßig schwierig und zeitaufwendig.

Die Aufgabe der Erfindung ist es, die Montage solcher Wasserablaufschläuche einfach zu halten und mit einfachen Maßnahmen störende Poltergeräusche zu vermeiden.

Gemäß der Erfindung wird diese Aufgabe gelöst, indem eine Schiebedachentwässerung gemäß dem Oberbegriff des Patentanspruches 1 die im Kennzeichenteil des Patentanspruches 1 aufgezeigten Merkmale aufweist.

Im Anspruch 2 ist eine zweckmäßige Maßnahme zum Befestigen der erfindungsgemäßen Abstandhalter an den Wasserablaufschläuchen erläutert.

Dadurch, daß auf die dünnen, steifen Wasserablaufschläuche Abstandshalter aufgesetzt sind, deren in Einfädelrichtung der Wasserablaufschläuche schräg nach außen und hinten gerichteten federnden Zungen den Schlauch in Abstand zu den Wandungen der Dachsäule halten, wird ein einfaches und rasches Einfädeln der Wasserablaufschläuche während der Montage ermöglicht und dennoch zuverlässig störende Poltergeräusche im Fahrbetrieb des Kraftfahrzeuges vermieden.

In zweckmäßiger Weise sind die Abstandhalter mit ihrem inneren Umfang auf dem Wasserschlauch mittels eines nach außen gewölbten Federbogens festgeklemmt.

Die Erfindung wird anhand eines in der beiliegenden Zeichnung gezeigten Ausführungsbeispieles näher erläutert. Es zeigt:

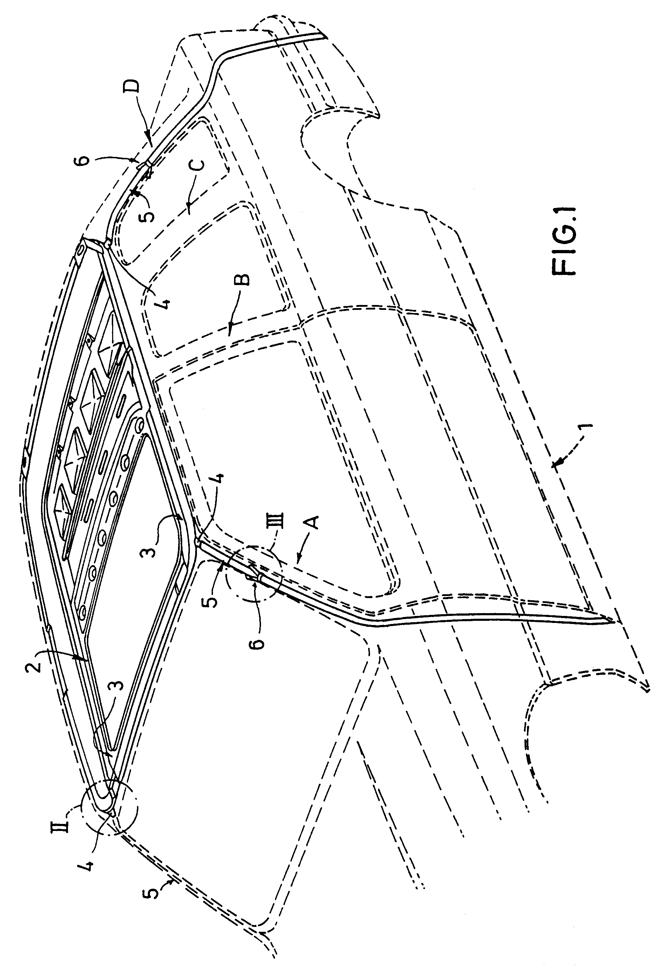

Fig. 1 eine in gestrichelten Linien angedeutete Kraftfahrzeugkarosserie mit einem im Dachbereich angeordneten in vollen Linien gezeichneten Schiebedachrahmen;

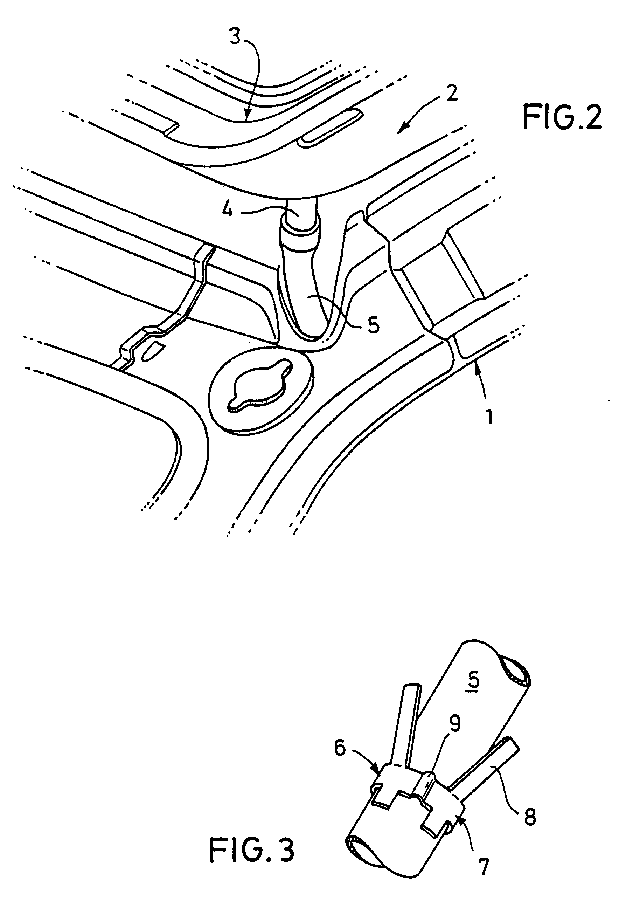

Fig. 2 einen vergrößerten Ausschnitt des Bereiches im Kreis II in Fig. 1 und

Fig. 3 eine vergrößerte Ansicht des im Kreis III gezeigten Bereiches in Fig. 1.

Die in gestrichelten Linien angedeutete Kraftfahrzeugkarosserie 1 weist die Windschutzscheibe begrenzende vordere Dachsäulen A, zwei seitliche Dachsäulen B und C und die Heckscheibe begrenzende hintere Dachsäulen D auf.

Im Dachbereich der Kraftfahrzeugkarosserie 1 ist ein Schiebedachrahmen 2 angeordnet, der umlaufend mit einer Wasserauffangrinne 3 versehen ist, die an allen vier Enden mit Wasserablaufstutzen 4 ausgestattet ist an die Wasserablaufschläuche 5 durch Aufstecken angeschlossen werden.

Die Wasserablaufschläuche 5 müssen über die Hohlräume der Dachsäulen A und der Dachsäulen D das in den Schiebedachrahmen eingedrungene Wasser nach außen abführen.

Die Wasserablaufschläuche 5 müssen hierzu in die Hohlräume der Dachsäulen eingefädelt werden, was nur dann verhältnismäßig leicht geht, wenn die Wasserablaufschläuche verhältnismäßig dünn und steif sind. Damit solche dünn und steif gehaltenen Wasserablaufschläuche 5 durch Vibrationen im Fahrbetrieb nicht zu Poltergeräuschen innerhalb der Dachsäulen A und D führen, sind auf die Wasserablaufschläuche 5 Abstandhalter 6 aufgesetzt. Die Abstandhalter weisen einen ringförmigen Basisteil 7 und zumindest drei federnde Zungen 8 auf, die sich vom Basisteil 7 in Einfädelrichtung des Wasserschlauches 5 schräg nach außen und hinten erstrecken.

Damit die Abstandhalter 6 einfach und schnell auf die Wasserablaufschläuche 5 aufgesetzt werden können, ist ihr ringförmiger Basisteil 7 an einer Stelle seines Umfanges mit einem nach außen gewölbten Federbogen 9 versehen, der für ein elastisches Festklemmen sorgt.

Obwohl in dem gezeigten Ausführungsbeispiel in jeder Dachsäule nur ein Abstandshalter angeordnet ist, ist es selbstverständlich, daß bei Bedarf mehrere und auch unterschiedliche Ausführungsformen von Abstandshaltern, z. B. mit vier oder mehreren Federzungen angeordnet werden können.

## Patentansprüche

1. Schiebedachentwässerung für Kraftfahrzeuge mit einer im Schiebedachrahmen angeordneten Wasserauffangrinne, aus der über an den Ecken der Schiebedachrahmens angeordneten Wasserablaufstutzen und daran angeschlossenen Wasserablaufschläuche eingedrungenes Wasser über die Dachsäulen der Karosserie nach außen abgeführt wird, **dadurch gekennzeichnet,** daß auf die Wasserablaufschläuche (5) Abstandhalter (6) aufgesetzt sind, deren in Einfädelrichtung der Wasserablaufschläuche (5) schräg nach außen und hinten verlaufende, federnde Zungen (8) den Schlauch im Abstand zur Wandung der Dachsäulen (A und D) halten.

**2.** Schiebedachentwässerung nach Anspruch 1, **dadurch gekennzeichnet,** daß die Abstandhalter (6) mit ihrem inneren Umfang, ihrem ringförmigen Basisteil (7) auf dem Wasserablaufschlauch (5) durch die Wirkung eines sich nach außen wölbenden Federbogens (9) festgeklemmt sind.

## Claims

**1.** Sliding roof drainage system for motor vehicles with a water collecting channel arranged in the sliding roof frame, from which channel water penetrating through the seal fissure is led out via water drainage connections located at the corners of the sliding roof frame and water drainage hoses connected to these through the body roof pillars, characterised in that attached to the water drainage hoses (5) are spacers (6) whose sprung tongues (8) extend obliquely outwards and backwards in the direction of threading of the water drainage hoses (5) and hold the hose at a distance from the wall of the roof pillars (A and D).

**2.** Sliding roof drainage system according to Claim 1, characterised in that the spacers (6) are clamped in place with their inside circumference, their annular base section (7), on the water drainage hose (5) by the action of an outwardly curved spring bow (9).

## Revendications

**1.** Dispositif d'évacuation de l'eau pour toits ouvrants de véhicules automobiles, comprenant une gouttière collectrice de l'eau qui est disposée dans le châssis du toit ouvrant et hors de laquelle l'eau qui a pénétré est évacuée vers l'extérieur, en passant par les pieds de la carrosserie, et par l'intermédiaire de tubulures d'écoulement de l'eau disposées aux coins du châssis du toit ouvrant et de tuyaux d'écoulement de l'eau qui leur sont raccordés, caractérisé par le fait que sont posées sur les tuyaux d'écoulement de l'eau (5) des entretoises (6) dont les languettes élastiques (8) s'étendent obliquement, vers l'extérieur et vers l'arrière dans la direction d'enfilage des tuyaux d'écoulement de l'eau (5), en maintenant le tuyau à distance de la paroi des pieds (A et D).

**2.** Dispositif d'évacuation de l'eau pour toits ouvrants selon la revendication 1, caractérisé par le fait que les entretoises (6) sont serrées sur le tuyau d'écoulement de l'eau (5) par le pourtour intérieur de leur partie de base annulaire (7) grâce à l'action d'une partie en arc élastique (9) qui est cintrée vers l'extérieur.

FIG.1

FIG.2

FIG.3